Europäisches Patentamt

(19) European Patent Office

Office européen des brevets

(11) Publication number: **0 058 517**

**A2**

(12) **EUROPEAN PATENT APPLICATION**

(21) Application number: **82300672.1**

(22) Date of filing: **11.02.82**

(51) Int. Cl.³: **B 23 B 41/00**
**B 23 B 51/04**

(30) Priority: **13.02.81 GB 8104619**

(43) Date of publication of application:
**25.08.82 Bulletin 82/34**

(84) Designated Contracting States:
**AT BE CH DE FR IT LI NL SE**

(71) Applicant: **Yarnell, Ian Roland**
**Trading as Reitip Services Unit 106B, Blackdown**
**Industries Haste Hill**
**Haslemere Surrey GU27 2HA(GB)**

(72) Inventor: **Yarnell, Ian Roland**
**Trading as Reitip Services Unit 106B, Blackdown**
**Industries Haste Hill**
**Haslemere Surrey GU27 2HA(GB)**

(74) Representative: **Blatchford, William Michael et al,**
**Withers & Rogers 4 Dyer's Buildings Holborn**
**London EC1N 2JT(GB)**

(54) **Remote drilling apparatus.**

(57) A cutting device, intended primarily for drilling apertures in a horizontally extending underground pipe (10) exposed by an excavated shaft, comprises a jig (16, 18) housing a rotatable drill block (40), and a pair of hydraulic rams (24, 26) which can be expanded against the sides of the shaft. The rams (24, 26) are aligned in an upwardly inclined position so that the jig (16, 18) can be firmly located on the pipe (10), thereby avoiding the need for chains or other clamping attachments which require access to the underside of the pipe (10). The device is compact and can be positioned and operated from ground level. It therefore requires only a comparatively narrow excavated shaft.

FIG.1.

EP 0 058 517 A2

- 1 -

This invention relates to a cutting device primarily for use on a work surface in a confined space, and in particular for drilling an aperture in the wall of an underground pipe. The invention has particular application to the renovation of sewers.

One technique of sewer renovation involves lining the existing damaged stone or ceramic sewer with an internal polyethylene pipe. In this way an underground sewer section can be repaired without excavating along the whole length of sewer, the internal pipe being inserted at an open end and passed through the interior of the sewer section to emerge at the other end. However, when the technique is applied to a sewer which has frequent branches, as may occur for example when the sewer serves rows of closely spaced buildings, its advantages are diminished since large numbers of holes must be excavated to allow branches to be connected to the new pipe. In some circumstances the cost of excavation and back-filling can rise to the extent that it would cost no more to excavate, remove, and replace the whole sewer.

Polyethylene branching pipes are attached to the main internal pipe by breaking the existing earthenware sewer to expose the internal pipe and then drilling a hole in the wall of the internal pipe so that the branching pipe can be connected to the main pipe. The connection may be sealed with a plastics adhesive. Drilling the hole in the main pipe requires accurate positioning of drilling apparatus, which may be secured by chains passed around the pipe, which in turn necessitates that a person has to be able to reach the pipe. Consequently the excavated hole must be at least 1.5 metres in diameter and should preferably be timbered for safety.

It is an object of this invention at least partly to overcome the disadvantage mentioned above.

According to one aspect of this invention, there is provided a cutting device primarily for use on a work surface in a confined space, wherein the device comprises a jig for receiving a rotatable cutter or drill, and at least two expandable struts connected to the jig, each strut being extendable laterally at an inclined angle relative to the axis of rotation of the cutter or drill, so that in use of the device the struts can be expanded outwardly from the jig to bear against adjacent support surfaces so as to exert a force on the jig generally in the direction of the said axis, thereby pressing the jig against the work surface.

According to another aspect of the invention there is provided a method of cutting an aperture in a workpiece in a confined space, wherein a jig for rotatably housing a cutter or drill is positioned on or adjacent the workpiece, and wherein expandable struts attached to the jig and extending laterally and at an inclined angle relative to the axis of rotation of the cutter or drill are each expanded outwardly against an adjacent surface or surfaces to urge the jig against the workpiece, whereby the cutter or drill can be rotated in the jig to cut the aperture.

The expandable struts referred to above are preferably hydraulic or pneumatic rams which can be expanded remotely via a pipe or pipes leading from the confined space to a remote pump.

An advantage of the invention is that the drilling of a hole in an underground pipe can be controlled remotely from ground level. It is not necessary for the operator to descend to the level of the pipe, and therefore the excavated shaft need only be of a size sufficient to accommodate the jig and its hydraulic rams. Such a shaft is typically only 0.5 metres in diameter, and is therefore significantly quicker and cheaper to dig and refill than a shaft large enough for a man to descend to the level of the pipe.

In its preferred form the jig has a cylindrical sleeve housing for a drill block and drill bit, the housing being supported on a saddle having curved lower edges which match the outside diameter of the pipe to be drilled. A number of inter-changeable saddles may be provided to suit different pipe sizes. The rams are preferably mounted by hinged joints or universal joints on the upper edge of the housing so that the rams can be folded upwardly as the jig is lowered down the shaft; the rams can then be swung outwardly to the required angle, (preferably less than 45° to the horizontal), when the jig is seated on the pipe. Stops may be provided on the housing so that the rams fall automatically to the required inclination necessary for exerting a downward force on the pipe.

The jig may be lowered down the shaft and manipulated by rods screwed into the housing. These provide a solid connection for the operator at ground level so that he can judge when the saddle is correctly seated on the pipe before operating the rams. To provide solid support for the rams on the sides of the excavated shaft, a concrete ring or battens may be positioned in the shaft immediately above the pipe.

Drive to the drill block is preferably via a removable telescopic shaft including a universal joint for ease of operation and to prevent lateral strain on the shaft and drill block. The universal joint is preferably at ground level and may be provided with a means of locking the joint, for example, a sliding outer tube, to give the operator more control when inserting the drill block in the housing. In the preferred embodiment, the drive shaft has a threaded portion received in a fixed support to provide a feed device for feeding the drill into the workpiece at a predetermined rate as the drill is rotated. This may be a dual thread feed device having a forward thread and a reverse thread of different pitches to give a wider choice of feed rates.

In an alternative embodiment more suited to drilling concrete pipes, the threaded feed device is replaced by a pair of pneumatic or hydraulic feed rams acting on the drive shaft on the drill to drive the drill into the workpiece in response to pressurisation of the feed rams.

The invention will now be described by way of example with reference to the drawings in which:-

Fig. 1 is a perspective view of apparatus in accordance with the invention;

Fig. 2 is a plan view of a drill housing;

Fig. 3 is a sectioned side view of a portion of the drill housing showing one arrangement for attaching an inclined ram;

Fig. 4 is a sectioned side view of apparatus in accordance with the invention; and

Fig. 5 is a sectioned side view of an alternative feed device.

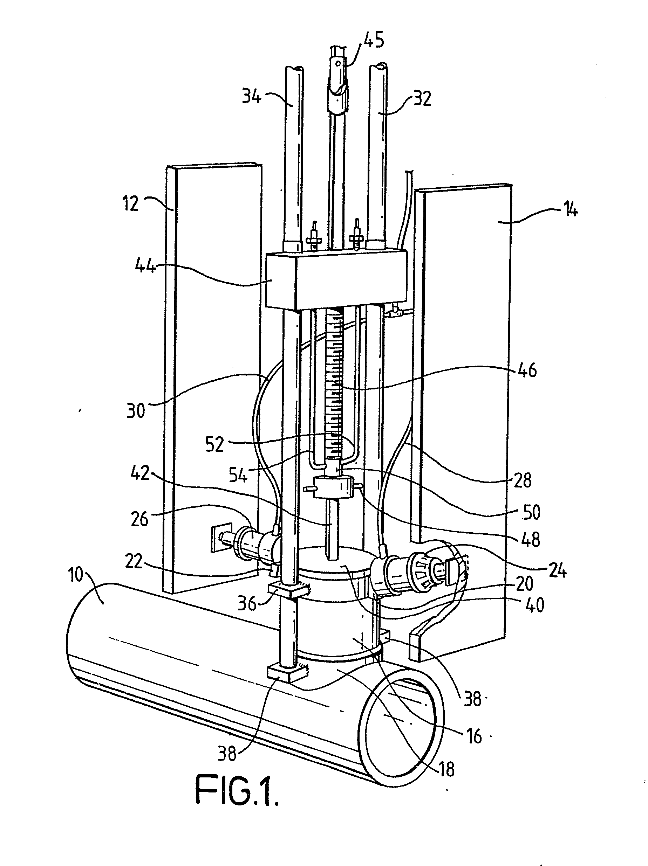

Referring firstly to Fig. 1, apparatus for drilling an aperture in a polyethylene pipe 10 is shown seated on a portion of the pipe 10 and anchored against two battens 12 and 14, the latter representing the sides of an excavated shaft of approximately 0.5 metres diameter which has been bored to expose the pipe 10. For the sake of clarity, the material in which the shaft has been dug and in which the rest of the pipe 10 is buried is not shown in the drawing. The apparatus includes a drilling jig comprising a drill housing 16 and a saddle 18 seated on the surface of the pipe 10. Brackets 20 and 22, welded to opposite sides of the housing 16, support a pair of hydraulic rams 24 and 26 extending outwardly and at an inclined upward angle of approximately $15^{o}$ to bear against the sides of the excavated shaft.

The battens 12 and 14 are placed against the walls of the shaft to provide a solid support for the feet of the rams 24 and 26, but it will be understood that depending on the soil conditions this extra support may not be needed. Alternatively, a metal or concrete pipe section may be positioned in the shaft to provide the necessary support.

The rams 24 and 26 may have screw extensions to allow for shafts of different diameters. They are connected by a pair of fluid supply pipes 28 and 30 to a pump (not shown) at ground level. When the rams 24 and 26 are pressurised their upward inclination results in a net downward force on to the housing 16, pushing the saddle 18 onto the pipe 10, thereby providing a firm location while the pipe is being drilled.

Tubular manipulating rods 32 and 34 located in brackets 36 and 38 on the sides of the housing 16 extend to ground level to allow an operator to lower the apparatus onto the pipe 10 and position the housing 16 over the required drilling location before the rams 24 and 26 are operated. The rods 32 and 34 are rotatable in the brackets, and have threaded ends secured in the lower brackets 38.

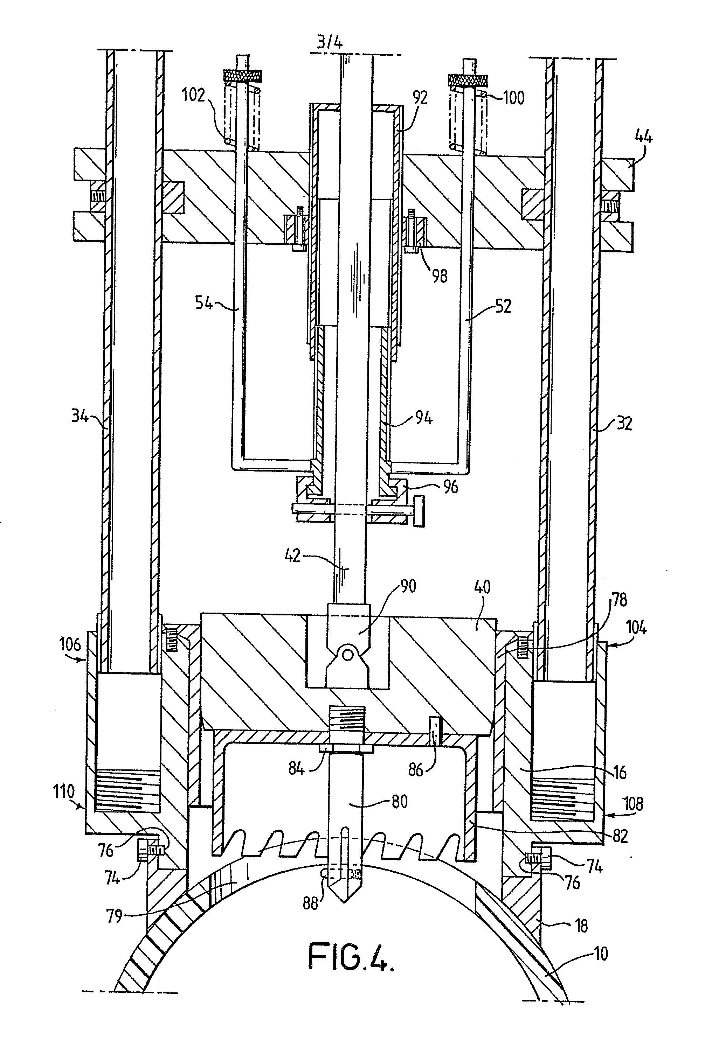

The housing 16 contains a rotatable drill block 40 to which is mounted a cup drill (described below with reference to Fig. 4). A square section drive shaft 42 is located in the drill block 40 and extends upwardly to a drive motor (not shown) at ground level. A universal joint 45 provides for inclination of the upper portion of the shaft, and a telescopic connection (not shown) may be included if required.

With polyethylene pipes, drilling is preferably performed at a predetermined fixed rate, and for this reason a drill feed device is attached to the shaft 42 as shown. The device comprises a bridge section 44 attached to the manipulating rods 32 and 34 and having an internally threaded hole for guiding a threaded portion 46 of the drive shaft 42. As the drive shaft 42 is rotated, it descends at a rate determined by the pitch of the thread, so forcing the drill block 40 and its attached drill into the pipe 10 as drilling progresses. A collar 48 fixed to the shaft 42 is coupled to a ring 50 connected to a pair of stays 52 and 54 to prevent the drill block 40 from dropping into pipe 10 should the threaded portion 46 pass completely out of the bridge section 44.

In the application of the invention illustrated by Fig. 1 the excavated shaft may be 3 metres deep. The pipe 10 is a polyethylene pipe previously inserted in an existing earthenware sewage pipe which has been broken away at the bottom of the shaft to expose the pipe 10. The apparatus may be used typically to drill a hole approximately 100 mm in diameter in the wall of the pipe 10 so that a branching pipe can be inserted and bonded to the sides of the hole.

The sequence of operations for drilling the hole may be as follows:-

(i) Bore a shaft of approximately 0.5 metres diameter at the required position. (The design of the jig allows some inaccuracy in that the central aixs of the excavated shaft need not be directly above the axis of the pipe 10).

(ii) Break the wall of the existing sewer earthenware pipe.

(iii) Place the battens 12 and 14 against the sides of the shaft to provide a firm footing for the rams 24 and 26.

(iv) Lower the jig by means of the rods 32 and 34, and manipulate it until it is at the required position on the pipe 10.

(v) Allow the rams 24 and 26 to fall outwardly to the angle shown in Fig. 1 and pressurise the rams to cause their feet to bear against the battens 12 and 14.

(vi)   Attach a drive motor to the drive shaft 44.

(vii)   Bore the hole in pipe 10.

(viii)   Depressurise the rams 24 and 26, and withdraw the apparatus together with the waste coupon which has been cut out of the pipe 10.

(ix)   Apply adhesive to the edge of the drilled hole and insert a branch pipe into the drilled hole.

(x)   Pour concrete down the shaft, encasing the lower portion of the branch pipe.

Alternatively, the feed device, the drill block 40 and the drill can be removed prior to depressurising the rams so that the housing 40 can be used as a guide for locating the branch pipe in the drilled hole.

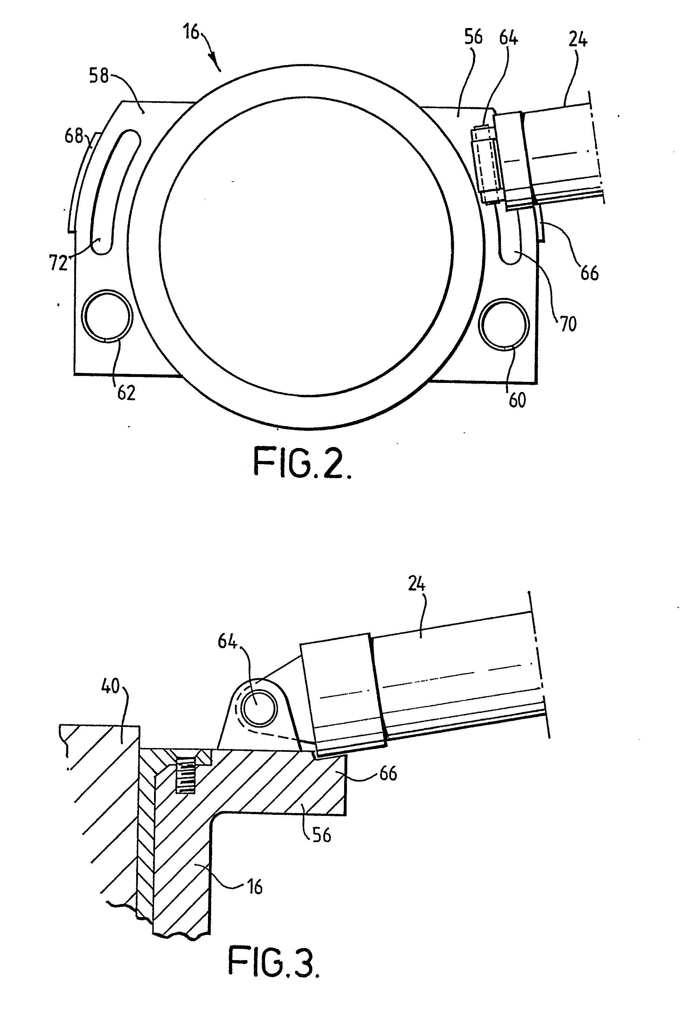

Further details of the apparatus, together with a number of alternative features of the apparatus, are shown in Figures 2 to 5.

Referring to Figs. 2 and 3, showing the housing in a plan view, the rams 24 and 26 and the manipulating rods 32 and 34 may be mounted on a single pair of enlarged brackets 56 and 58, the rods 32 and 34 being received in threaded holes 60 and 62.  The rams 24 and 26 are each hinged about a horizontal axis defined by a hinge pin 64 so that they can be retracted when the housing 16 is being raised or lowered.  The brackets 56 and 58 have projecting stops 66 and 68 which each abut the side of the respective ram to set the upward inclination of the rams at 15° in their operative position. Slots 70 and 72 are provided for circumferential adjustment of the ram position when, for example, the pipe 10 is not centrally located in the excavated shaft.

The drilling jig, comprising the housing 16 and saddle 18, will now be described in more detail with reference to Fig. 4, which also illustrates additional features not shown in Figs. 1 to 3.

The housing 16 rests on the saddle 18 which is shaped to correspond to the outer surface of the pipe 10. In this embodiment the saddle 18 is detachable from the housing 16 to allow replacement by a different saddle shaped to correspond to a pipe of another diameter. The housing 16 may also be rotated on the saddle since the saddle retaining bolts 74 are located in a groove 76 in the housing. The drill block 40 is rotatable inside the housing 16 and is in contact with a replaceable liner 78 of corresponding diameter. The drill for cutting the aperture 79 in the pipe 10 is in two parts, which are (i) a pilot drill 80 and (ii) a cup drill 82, the latter being shown at a position corresponding to an intermediate stage in the drilling process. The pilot drill 80 is threaded at its upper end and receive in a threaded bore in the drill block 40. A flange 84 serves to secure the cup drill 82 to the underside of the drill block 40, rotation of the cup drill 82 relative to the block 40 being prevented by the dowel 86. When the pilot drill 80 has penetrated the pipe 10 as shown, a small spring loaded pip 88 projects from the side of the drill. The purpose of this is to prevent the waste coupon cut away from the pipe 10 by the cup drill 82 from falling into the pipe 10 when drilling is complete. A variety of different cup drill sizes can be accommodated, up to a maximum diameter corresponding to the internal diameter of the liner 78.

In this embodiment the drive shaft 42 includes a second universal joint 90.

Fig. 4 also illustrates an alternative, dual threaded drill feed device comprising a first threaded sleeve 92 having a square hole at its upper end so that it rotates with the drive shaft 42, and a second non-rotatable threaded sleeve 94 coupled to a rotatable collar 96 fixed to the drive shaft. The first sleeve 92 is mounted in a threaded ring 98 fitted to the bridge section 44 so that, as the drive shaft 42 rotates in clockwise direction, the sleeve 92 moves towards the pipe 10. The first sleeve 92 is also internally threaded to receive the external thread of the second sleeve 94. The thread on sleeve 94 is finer in pitch than the external thread of sleeve 92. Thus, as the first sleeve 92 rotates it draws the second sleeve 94 upwards relative to the first sleeve 92, but the net effect is that the second sleeve 94 moves towards the pipe 10 at a relatively slow rate due to the combined effect of the two threads. This allows a relatively slow feed rate to be obtained without reducing the speed of rotation of the drive shaft, and without reducing the pitch of a single thread feed device as shown in Fig. 1 to an impracticable degree. Stays 52 and 54 prevent rotation of the second sleeve 94, and slide in the bridge 44 against springs 100 and 102 to maintain the two sleeves in contact with each other when the ends of threads are reached.

Additional feed travel can be achieved by providing two spaced attachment points on the housing 16 for each manipulating rod 32 and 34. As in the embodiment shown in Fig. 1, the manipulating rods are rotatable in the bridge section 44 and are threaded at their lower ends. In this embodiment however, both upper and lower attachment points are threaded to receive the rod ends. When a relatively long feed travel is required, the first part of the drilling process is performed with the rods 32 and 34 mounted in the upper threaded portions 104 and 106 in the housing 16. When the feed device has reached the end of its travel, it is reset and the rods 32 and 34 are screwed down so that they drop into the lower thread portions 108 and 110. The drilling process is then restarted and continues until it is completed.

The feed devices described above have been developed primarily for cutting polyethylene pipes.

- 13 -

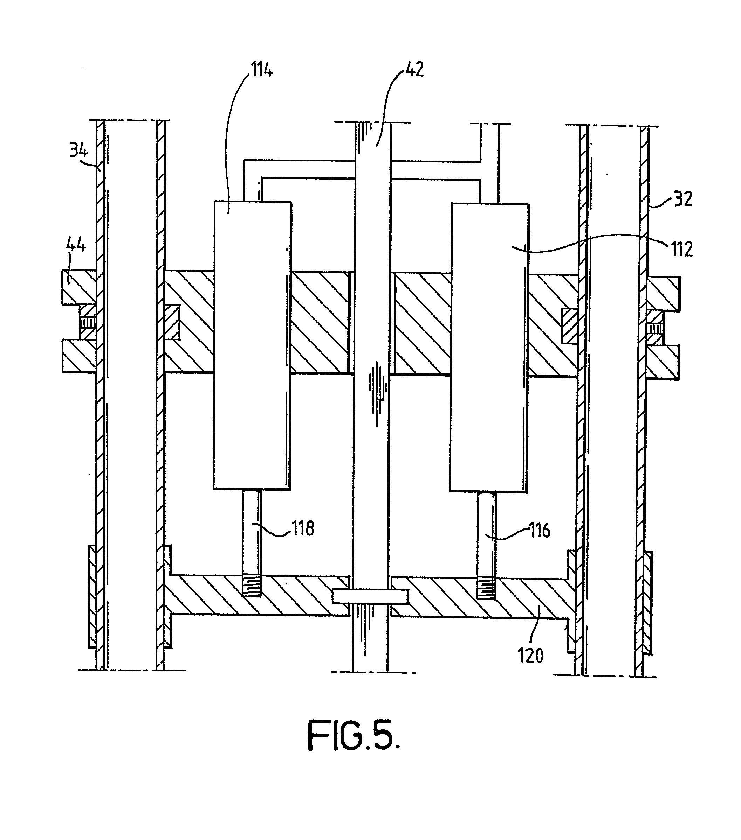

When drilling concrete, an alternative feed device is more suitable. Referring to Fig. 5, this device has a pair of pneumatic or hydraulic rams 112 and 114 mounted in the bridge section 44, the piston rods 116 and 118 being attached to a cross bar 120 coupled to the drive shaft 42. The cross bar 120 slides on the manipulating rods 32 and 34.

CLAIMS:

1. A cutting device for use in a confined space, comprising a jig (16, 18) for receiving a rotatable cutting tool (82) and at least two expandable struts (24, 26) connected to the jig, each strut being extendable laterally from the jig at an inclined angle relative to the axis of rotation of the cutting tool so that in use of the device the struts can be expanded outwardly from the jig to bear against an adjacent supporting surface or surfaces so as to exert a force on the jig generally in the direction of the said axis, thereby pressing the jig against a work surface (10).

2. A device according to claim 1 including at least a pair of manipulating rods (32, 34) attached to the sides of the jig (16, 18) and extending substantially parallel to the said axis of rotation.

3. A device according to claim 1, wherein each strut (24, 26) is a hydraulic ram attached at an inner end to a hinged coupling (64) which allows the ram to be swung from a retracted position to an operable position.

4. A device according to claim 3, including stops (66, 68) defining the said inclined angle when the struts (24, 26) are in the operable position.

5. A device according to claim 1, wherein the jig (16, 18) houses a rotatable drill block (40) which is axially movable in the jig and is shaped to receive a cutting tool (82) in the form of a drill.

6. A device according to claim 5 including a screw threaded feed control device for controlling axial movement of the drill block (40) in response . to rotation of the latter.

7. A device according to claim 6 including:
manipulating rods (32, 34) attached to opposite sides of the jig (16, 18) and extending substantially parallel to the said axis of rotation,
an axial drive shaft (42) coupled to the manipulating rods (32, 34),
the feed control device (44, 46) comprising a bridge member (44) attached to the manipulating rods (32, 34) and a screw threaded portion (46) of the drive shaft (42).

8. A device according to claim 6, wherein the feed control device is a dual-thread reduction mechanism having two pairs of interacting threads, one acting to move the drive block (40) towards the work surface, and the other acting in reverse, the pitches of the respective pairs of threads being such that the resultant movement of the drive block (40) is towards the work surface as the drive block (40( is rotated clockwise.

9. A device according to claim 2, including at least one fluid filled ram (112, 114) coupled to the drill block (40) to urge the block towards the work surface, the axis of the or each ram being substantially parallel to the axis of rotation of the block.

10. A device according to claim 1, wherein the jig comprises a housing (16) and a removable saddle (18).

11. A device according to claim 5, wherein the cutting tool comprises a cup drill (82) and a pilot drill (84).

12. A method of cutting an aperture in a workpiece (10), wherein a jig (14, 16) for rotatably housing a cutting tool (82, 84) is positioned on or adjacent the workpiece (10), and wherein expandable struts (24, 26) attached to the jig and extending outwardly from the jig at an inclined angle relative to the axis of rotation of the cutting tool are expanded against adjacent supports to urge the jig against the workpiece substantially in the direction of the said axis, whereby the cutting tool can be rotated in the jig to cut the aperture.

13.   A cutting device operable to be clamped against a workpiece, the device comprising:-

a jig having an underside surface for engaging the workpiece;

a cutting tool mounting member housed in the jig and rotatable about a cutting tool axis; and

at least two expandable struts mounted on the jig and arranged to extend outwardly from the jig at an upwardly inclined angle;

the struts being expandable for engaging side supports adjacent the workpiece thereby to exert a resultant force on the jig towards the workpiece and generally in the direction of the said axis.

1/4

FIG.1.

FIG.2.

FIG.3.

FIG.4.

0058517

FIG.5.